# EUROPÄISCHE PATENTSCHRIFT

(11) **EP 1 099 878 B1**
(45) Veröffentlichungstag und Bekanntmachung des Hinweises auf die Patenterteilung: **23.07.2003**
(21) Anmeldenummer: 00123022.6
(22) Anmeldetag: 24.10.2000
(51) Int. Cl.: F16H 25/20, A47B 9/12, A47B 9/00

(54) **Elektromotorische Verstellanordnung**
Actuator with an electro motor
Actionneur à moteur électrique

(30) Priorität: 11.11.1999 DE 29923059 U
(43) Veröffentlichungstag der Anmeldung: 16.05.2001
(73) Patentinhaber: Dewert Antriebs- und Systemtechnik GmbH & Co. KG, D-32278 Kirchlengern (DE)
(72) Erfinder: Roither, Andreas, 33649 Bielefeld (DE)
(74) Vertreter: Specht, Peter, Dipl.-Phys.

(56) Entgegenhaltungen:
- FR-A- 2 589 051

## Beschreibung

Die Erfindung bezieht sich auf eine elektromotorische Verstellanordnung mit wenigstens zwei rotierend antreibbaren Spindeln, auf die gegen Drehung gesicherte Spindelmuttern aufgesetzt sind. Bei einer bekannten elektromotorischen Verstellanordnung sind in einem gemeinsamen Gehäuse zwei miteinander fluchtende Spindeln angeordnet. Jede Spindel wird über ein Untersetzungsgetriebe von einem Motor angetrieben. Die Spindeln können demzufolge unabhängig voneinander in beiden Drehrichtungen angetrieben werden. Die auf die Spindeln aufgesetzten Spindelmuttem wirken mit Anlenkhebeln zusammen, um ein Möbelbauteil, beispielsweise das Kopf- oder das Fußteil eines Lattenrostes zu verstellen. Die Verstellbewegung eines solchen Möbelbauteiles ist normalerweise eine Schwenkbewegung. Derartige Verstelleinrichtungen haben sich für die gedachten Anwendungsfälle bestens bewährt. Sie sind jedoch nicht geeignet, um großflächige Bauteile, beispielsweise Tischplatten in der Höhe zu verstellen.

Eine zu diesem Zweck geeignete, gattungsgemäße Verstellanordnung ist aus der FR-2 589 051A bekannt.

Der Erfindung liegt die Aufgabe zugrunde, eine elektromotorische Verstellanordnung der eingangs näher beschriebenen Art so zu gestalten, daß sie in konstruktiv einfacher Weise als Höhenverstelleinrichtung genutzt werden kann.

Die gestellte Aufgabe wird gelöst, indem die Spindeln mit einem zwischen den Spindeln angeordneten Antriebsmotor antriebstechnisch gekoppelt und gegen eine Verschiebung in Längsrichtung gesichert sind, und daß an die Spindelmuttern direkt oder indirekt flexible Zugstränge angeschlossen sind, die über Umlenkrollen geführt und deren freien Enden an Hubprofilen festgelegt sind, die winklig, vorzugsweise rechtwinklig zum zu verstellenden Bauteil stehen.

Es ist nunmehr möglich, daß die elektromotorische Verstellanordnung beispielsweise in den Raum unterhalb einer Tischplatte so montiert wird, daß die Spindeln horizontal stehen. Über die Zugelemente können dann die Hubprofile angehoben werden, wenn die Spindelmuttem aufeinander zubewegt werden. Das Absenken eines Bauteiles erfolgt dann bei eingeschalteter Verstellanordnung und entgegengesetzten Drehrichtungen der Spindeln. Dadurch wird auch ein schlagartiges Absenken des Bauteiles verhindert. Die Anordnung der Zugelemente richtet sich nach dem jeweiligen Anwendungsfall. Durch die erfindungsgemäße Gestaltung der elektromotorischen Verstellanordnung werden horizontale Bewegungen in vertikale Bewegungen umgewandelt.

Eine besonders kostruktiv einfache Ausführung ist gegeben, wenn zwei Spindeln der Verstellanordnung fluchtend zueinander angeordnet sind und wenn die Steigungen der fluchtenden Spindeln gegenläufig sind. Dadurch wird der Antrieb für die beiden Spindeln äußerst einfach, da eine geringstmögliche Anzahl von Antriebsrädern benötigt wird. Durch die gegenläufigen Steigungen der Spindeln werden dann die darauf aufgesetzten Spindelmuttern immer in den notwendigen entgegengesetzten Richtungen verfahren. Da jedoch rechtsgängige Spindeln bevorzugt verwendet werden, ist gemäß einer weiteren Lösung auch vorgesehen, daß die Drehrichtungen der Spindeln gegenläufig sind. Dies ist durch eine Auslegung des die Spindeln antreibenden Antriebes möglich. Da die Abtriebsdrehzahl eines Elektromotors relativ groß ist, die Verstellgeschwindigkeit jedoch gering sein soll, ist vorgesehen, daß der Antrieb von zwei fluchtenden Spindeln über ein vom Antriebsmotor antreibbares Untersetzungsgetriebe, vorzugsweise durch einen Schneckentrieb erfolgt. Damit die flexiblen Zugstränge keinen Kontakt mit den Spindeln bekommen, ist in weiterer Ausgestaltung vorgesehen, daß auf die Spindelmuttern Hub- oder Schubrohre aufgesetzt sind, die der Bewegung der Spindelmuttern folgen. An den freien Enden der Hub- bzw. Schubrohre sind die elastischen Zugstränge angelenkt. Dies gilt für eine Ausführung beispielsweise für einen Tisch mit zwei seitlichen Säulen. Die Hubprofile sind zweckmäßigerweise Innenprofilabschnitte, die in äußeren Führungsrohren geführt sind. Die Innenprofilabschnitte können geeignete Rohrabschnitte sein und beispielsweise aus Aluminium bestehen. Die Führungsrohre sind dann bei einem Tisch die Tischbeine, wobei die Innenprofilabschnitte an der Unterseite der Tischplatte festgelegt sind und rechtwinklig dazu stehen. Die Umlenkrollen sind an den einander zugekehrten Flächen im oberen Bereich der Führungsrohre gelagert. Damit die Reibung beim Verfahren der Innenprofilabschnitte möglichst gering wird, damit jedoch auch ein Ecken oder Verkanten vermieden wird, ist vorgesehen, daß die Innenflächen der äußeren Führungsrohre im Abstand zu den Außenflächen der Innenprofilabschnitte stehen, und daß an den Innenflächen der Führungsrohre oder an den Außenflächen der Innenprofilabschnitte Gleitstücke festgelegt sind. Dadurch werden die Innenprofilabschnitte schließend in den Führungsrohren geführt. Bei einer Verwendung zur Höhenverstellung einer Tischplatte kann es notwendig werden, daß mittels der Verstelleinrichtung vier Innenprofilabschnitte bewegt werden. Damit nur eine elektromotorische Verstelleinrichtung notwendig ist, ist in weiterer Ausgestaltung vorgesehen, daß an den Hubrohren quer dazu stehende Stangen festgelegt sind, an denen die elastischen Zugmittel befestigt sind. Die elektromotorische Verstelleinrichtung liegt dann mittig zwischen den einander gegenüber stehenden Führungsrohren. Da nur eine elektromotorische Verstelleinrichtung benötigt wird, entfällt eine Gleichlaufsteuerung für die Motoren. Die elektromotorische Verstelleinrichtung ist mit einer Steuerung versehen. Das Ansteuern des Motors erfolgt beispielsweise über einen Handschalter oder auch drahtlos über eine Fernbedienung. Da das zu verstellende Bauteil je nach seiner Größe auch relativ schwer sein kann, die Antriebsleistung des Antriebsmotors jedoch möglichst gering sein soll, ist in weiterer Ausgestaltung vorgesehen, daß jeder flexible Zugstrang als Flaschenzug ausgebildet ist. Die Antriebsleistung der elektromotorischen Verstelleinrichtung kann dann je nach Anzahl der Rollen äußerst gering sein. Ferner ist es möglich, daß unabhängig von der Gestaltung der flexiblen Zugstränge den Spindeln bzw. den Spindelmuttern eine Gasfeder funktionell zugeordnet wird, die die Hubbewegung unterstützt. Das Einfahren der Kolbenstange bzw. der Kolbenstangen der Gasfedern erfolgt dann durch das Eigengewicht des abzusenkenden Bauteils. Durch die erfindungsgemäße elektromotorische Verstelleinrichtung wird eine einfache und demzufolge auch kostengünstige Lösung vorgeschlagen, um auch noch Bauteile zu verstellen, deren Gewicht relativ groß ist.

Anhand der beiliegenden Zeichnung wird die Erfindung noch näher erläutert. Es zeigt:

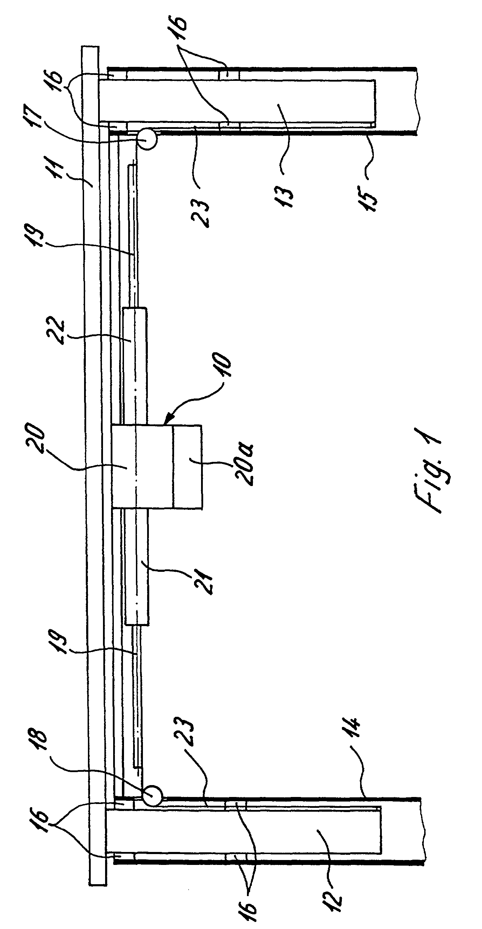

- **Figur 1**: eine Ausführungsform der elektromotorischen Verstellanordung, ausgelegt zur Höhenverstellung einer Tischplatte in einer schematischen Seitenansicht.

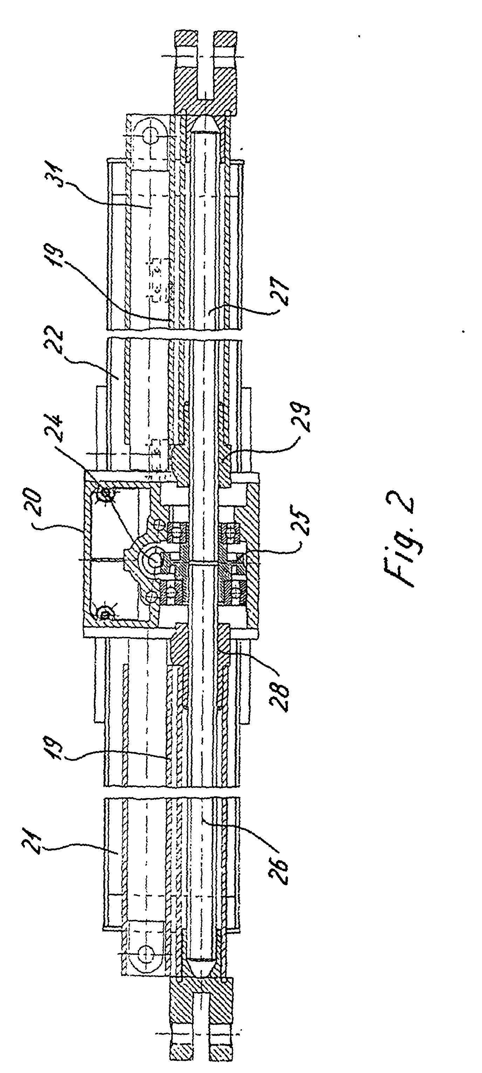

- **Figur 2**: Die Antriebsanordnung in einer Schnittdarstellung.

In bevorzugter Ausführung wird die in den Einzelheiten nicht dargestellte elektromotorische Verstellanordnung 10 zur Höhenverstellung einer Tischplatte 11 benutzt. An der Tischplatte 11 sind in den Eckbereichen an der Unterseite Innenprofilabschnitte 12, 13 festgelegt, die rechtwinklig dazu stehen. Die Innenprofilabschnitte können aus Leichtmetallrohren gefertigt sein. Sie greifen in die Tischbeine 14, 15 des Tischgestells ein. Die Tischbeine 14, 15 bestehen aus Führungsrohren, die ebenfalls aus Leichtmetall, vorzugsweise aus Aluminium gefertigt sind. Die Innenflächen der Tischbeine 14, 15 stehen im Abstand zu den Außenflächen der Innenprofilabschnitte. Damit die Innenprofilabschnitte 12, 13 schließend in den Tischbeinen 14, 15 geführt sind, sind entweder an den Innenflächen der Tischbeine oder an den Außenflächen der Innenprofilabschnitte 12, 13 Gleitstücke 16 festgelegt, die vorzugsweise aus einem Gleitlagerwerkstoff bestehen. Jedem Tischbein 14, 15 sind Umlenkrollen 17, 18 zugeordnet. Diese sind im oberen Bereich des Tischgestells bzw. in einem geringen Abstand zur Tischplatte drehbar gelagert. Mittig ist an dem Tischgestell der Antrieb der elektromotorischen Verstellanordnung 10 angeordnet. Der Antrieb besteht im wesentlichen aus einem Elektromotor und einem Schneckentrieb, der aus einer Motorschnecke 24 und einem Schneckenrad 25 besteht. An das Schneckenrad 25 des Schneckentriebes sind zwei Spindeln 26, 27 mit gegenläufigen Steigungen angeordnet. Auf die Spindeln 26, 27 sind gegen Drehung gesicherte Spindelmuttern angeordnet, die mit ein- und ausfahrbaren Hubrohren 19 bzw. Schubrohren versehen sind. An das Gehäuse 20 des Antriebes sind noch zwei äußere Flanschrohre 21 und 22 befestigt. An die freien Enden der Hubrohre 19 sind über die Umlenkrollen 17, 18 geführte flexible Zugstränge 23 befestigt. Diese flexiblen Zugstränge sind bevorzugt Drahtseile. Die freien Enden der flexiblen Zugstränge 23 sind in den unteren Bereichen der Innenprofilabschnitte 12, 13 festgelegt. In nicht näher dargestellter Weise könnten die Umlenkrollen 17, 18 auch die festen Rollen eines Flaschenzuges sein. Ferner können in nicht dargestellter Weise den Spindeln 26, 27 Gasfedern 30, 31 funktionell zugeordnet werden, die die Hubbewegung der Tischplatte 11 unterstützen. An das Gehäuse 20 des Antriebes ist noch eine Steuerung 20a angesetzt. Das Einschalten des Elektromotors kann über einen Handschalter oder auch drahtlos über eine Fernbedienung erfolgen. Bei der dargestellten Ausführung ist es notwendig, daß das Gewinde einer Spindel 26 bzw. 27 rechtsgängig und das Gewinde der anderen Spindel 27 bzw. 2b linksgängig ist. Bei einer entsprechenden Auslegung des Antriebes könnten jedoch ausschließlich rechtsgängige Spindeln 26, 27 verwendet werden, wenn die Drehrichtungen gegensinnig sind.

Die Erfindung ist nicht auf das dargestellte Ausführungsbeispiel beschränkt. Wesentlich ist, daß die Spindeln 26, 27 von einem Motor angetrieben werden und daß die Bewegungen der Spindelmuttern 28, 29 bzw. der Hubrohre 19 gegensinnig sind.

## Patentansprüche

1. Elektromotorische Verstellanordnung mit wenigstens zwei rotiegrensd antreibbaren Spindeln (26,27), auf die gegen Drehung gesicherte Spindelmuttern (28,29) aufgesetzt sind, **dadurch gekennzeichnet, daß** die Spindeln (26,27) mit einem zwischen den Spindeln angeordneten Antriebsmotor antriebstechnisch gekoppelt und gegen eine Verschiebung in ihrer Längsrichtung gesichert sind, und daß an die Spindelmuttern direkt oder indirekt flexible Zugstränge (23) angeschlossen sind, die über Umlenkrollen (17,18) geführt und deren freie Enden an Hubprofilen (12, 13) festgelegt sind, die winklig, vorzugsweise rechtwinklig, zum zu verstellenden Bauteil (11) stehen, und daß die Bewegungen der Spindelmuttern (28,29) gegensinnig sind.

2. Elektromotorische Verstellanordnung nach Anspruch 1, **dadurch gekennzeichnet, daß** die zwei Spindeln (26,27) der Verstellanordnung (10) fluchtend zueinander angeordnet sind, und daß die Steigungen der fluchtenden Spindeln gegenläufig sind.

3. Elektromotorische Verstellanordnung nach Anspruch 1, **dadurch gekennzeichnet, daß** die Steigungen der beiden Spindeln (26,27) gleichsinnig sind, und daß die Drehrichtungen der Spindeln gegenläufig sind.

4. Elektromotorische Verstellanordnung nach einem oder mehreren der vorhergehenden Ansprüche 1 bis 3, **dadurch gekennzeichnet, daß** auf die Spindelmuttern Hub- oder Schubrohre (19) aufgesetzt sind, an deren freie Enden die flexiblen Zugstränge (23) festgelegt sind.

5. Elektromotorische Verstellanordnung nach einem oder mehreren der vorhergehenden Ansprüche 1 bis 4, **dadurch gekennzeichnet, daß** der Antrieb von zwei fluchtenden Spindeln über ein vom Antriebsmotor antreibbares Untersetzungsgetriebe, vorzugsweise durch einen Schneckentrieb (24,25) erfolgt.

6. Elektromotorische Verstellanordnung nach einem oder mehreren der vorhergehenden Ansprüche 1 bis 5, **dadurch gekennzeichnet, daß** auf die Spindelmuttern Hub- oder Schubrohre (19) aufgesetzt sind, an deren freie Enden die flexiblen Zugstränge (23) festgelegt sind.

7. Elektromotorische Verstellanordnung nach einem oder mehreren der vorhergehenden Ansprüche, **dadurch gekennzeichnet, daß** an den freien Enden der Hub- oder Schubrohre (19) quer dazu stehende Stangen befestigt sind, an deren freie Endbereichen die flexiblen Zugstränge (23) festgelegt sind.

8. Elektromotorische Verstellanordnung nach einem oder mehreren der vorhergehenden Ansprüche 1 bis 7, **dadurch gekennzeichnet, daß** die Hubprofile Innenprofilabschnitte (12, 13) sind, die in äußeren Führungsrohren (14, 15) geführt sind.

9. Elektromotorische Verstellanordnung nach Anspruch 8, **dadurch gekennzeichnet, daß** die Innenflächen der äußeren Führungsrohre (11, 12) im Abstand zu den Außenflächen der Innenprofilabschnitte (12, 13) stehen und daß an den Innenflächen der äußeren Führungsrohre (14, 15) und/oder an den Außenflächen der Innenprofilabschnitte (12, 13) Gleitstücke (16) festgelegt sind.

10. Elektromotorische Verstellanordnung nach einem oder mehreren der vorhergehenden Ansprüche 1 bis 9, **dadurch gekennzeichnet, daß** die Umlenkrollen (17, 18) für die flexiblen Zugstränge (23) jeweils eine feste oder die festen Rollen eines Flaschenzuges sind.

11. Elektromotorische Verstellanordnung nach einem oder mehreren der vorhergehenden Ansprüche 1 bis 10, **dadurch gekennzeichnet, daß** die Innenprofilabschnitte (12, 13) und die äußeren Führungsrohre (14, 15) aus einem Leichtmetall, vorzugsweise aus Aluminium bestehen.

12. Elektromotorische Versellanordnung nach einem oder mehreren der vorhergehenden Ansprüche 1-11, **dadurch gekennzeichnet, daß** wenigstens einer Spindel vorzugsweise jedoch beiden Spindeln jeweils eine Gasfeder zugeordnet ist.

## Claims

1. Electromotive adjusting arrangement, with at least two rotationally driveable spindles (26, 27), onto which spindle nuts (28, 29) secured against rotation are placed, **characterized in that** the spindles (26, 27) are drive-coupled to a drive motor arranged between the spindles and are secured against displacement in their longitudinal direction, and **in that** the spindle nuts have connected to them directly or indirectly flexible pull cords (23) which are guided over deflecting rolls (17, 18) and the free ends of which are fixed to lifting profiles (12, 13) which are at an angle, preferably at right angles, to the component (11) to be adjusted, and **in that** the movements of the spindle nuts (28, 29) are in opposite directions.

2. Electromotive adjusting arrangement according to Claim 1, **characterized in that** the two spindles (26, 27) of the adjusting arrangement (10) are arranged in alignment with one another, and **in that** the pitches of the aligned spindles are opposed.

3. Electromotive adjusting arrangement according to Claim 1, **characterized in that** the pitches of the two spindles (26, 27) are in the same direction, and **in that** the directions of rotation of the spindles are opposed.

4. Electromotive adjusting arrangement according to one or more of the preceding Claims 1 to 3, **characterized in that** lift or push tubes (19), to the free ends of which the flexible pull cords (23) are fixed, are placed onto the spindle nuts.

5. Electromotive adjusting arrangement according to one or more of the preceding Claims 1 to 4, **characterized in that** the drive of two aligned spindles takes place via a reduction gear driveable by the drive motor, preferably by means of a worm mechanism (24, 25).

6. Electromotive adjusting arrangement according to one or more of the preceding Claims 1 to 5, **characterized in that** lift or push tubes (19), to the free ends of which the flexible pull cords (23) are fixed, are placed onto the spindle nuts.

7. Electromotive adjusting arrangement according to one or more of the preceding claims, **characterized in that** the free ends of the lift or push tubes (19) have fastened to them rods which are transverse thereto and to the free end regions of which the flexible pull cords (23) are fixed.

8. Electromotive adjusting arrangement according to one or more of the preceding Claims 1 to 7, **characterized in that** the lifting profiles are inner profile portions (12, 13) which are guided in outer guide tubes (14, 15).

9. Electromotive adjusting arrangement according to Claim 8, **characterized in that** the inner faces of the outer guide tubes (11, 12) are at a distance from the outer faces of the inner profile portions (12, 13), and **in that** sliding pieces (16) are fixed to the inner faces of the outer guide tubes (14, 15) and/or to the outer faces of the inner profile portions (12, 13).

10. Electromotive adjusting arrangement according to one or more of the preceding Claims 1 to 9, **characterized in that** the deflecting rolls (17, 18) for the flexible pull cords (23) are in each case a fixed roll or are fixed rolls of a pulley block.

11. Electromotive adjusting arrangement according to one or more of the preceding Claims 1 to 10, **characterized in that** the inner profile portions (12, 13) and the outer guide tubes (14, 15) consist of a light metal, preferably of aluminium.

12. Electromotive adjusting arrangement according to one or more of the preceding Claims 1-11, **characterized in that** at least one spindle, but preferably both spindles are assigned in each case a pneumatic spring.

## Revendications

1. Dispositif de réglage de position électromotorisé comportant au moins deux broches (26, 27) pouvant être entraînées en rotation sur lesquelles sont placés des écrous de broche (28, 29) bloqués en rotation, **caractérisé en ce que** les broches (26, 27) sont accouplées, par une technique d'entraînement, à un moteur d'entraînement disposé entre les broches, et sont bloquées contre un coulissement dans leur direction longitudinale, et **en ce qu'**aux écrous de broche sont raccordées directement ou indirectement des cordes de traction flexibles (23) qui passent sur des galets de renvoi (17, 18) et dont les extrémités libres sont fixées à des profilés de levage (12, 13) qui sont disposés suivant un angle, de préférence un angle droit, par rapport au composant (11) à régler, et **en ce que** les mouvements des écrous de broche (28, 29) sont de sens contraire.

2. Dispositif de réglage de position électromotorisé selon la revendication 1, **caractérisé en ce que** les deux broches (26, 27) du dispositif de réglage (10) sont disposées alignées entre elles, et **en ce que** les pas des broches alignées sont de sens contraire.

3. Dispositif de réglage de position électromotorisé selon la revendication 1, **caractérisé en ce que** les pas des deux broches (26, 27) sont de même sens et **en ce que** les sens de rotation des broches sont contraires.

4. Dispositif de réglage de position électromotorisé selon une ou plusieurs des revendications 1 à 3 précédentes, **caractérisé en ce que** sur les écrous de broche sont placés des tubes de levage ou de poussée (19) aux extrémités libres desquels sont fixées les cordes de traction flexibles (23).

5. Dispositif de réglage de position électromotorisé selon une ou plusieurs des revendications 1 à 4, **caractérisé en ce que** l'entraînement de deux broches alignées s'effectue au moyen d'un engrenage démultiplicateur qui peut être entraîné par le moteur d'entraînement, de préférence par un mécanisme à vis sans fin (24, 25).

6. Dispositif de réglage de position électromotorisé selon une ou plusieurs des revendications 1 à 5 précédentes, **caractérisé en ce que** sur les écrous de broche sont placés des tubes de levage ou de poussée (19) aux extrémités libres desquels sont fixées des cordes de traction flexibles (23).

7. Dispositif de réglage de position électromotorisé selon une ou plusieurs des revendications précédentes, **caractérisé en ce qu'**aux extrémités libres des tubes de levage ou de poussée (19) sont fixées des barres, transversales à ceux-ci, aux zones terminales libres de celles-ci étant fixées les cordes de traction flexibles (23).

8. Dispositif de réglage de position électromotorisé selon une ou plusieurs des revendications 1 à 7 précédentes, **caractérise en ce que** les profilés de levage sont des tronçons de profilés intérieurs (12, 13) qui sont guidés dans des tubes de guidage (14, 15) extérieurs.

9. Dispositif de réglage de position électromotorisé selon la revendication 8, **caractérisé en ce que** les surfaces intérieures des tubes de guidage (11, 12) extérieurs sont à distance des surfaces extérieures des tronçons de profilés intérieurs (12, 13) et **en ce que** sur les surfaces intérieures des tubes de guidage (14, 15) extérieurs et/ou sur les surfaces extérieures des tronçons de profilés intérieurs (12, 13) sont fixés des coulisseaux (16).

10. Dispositif de réglage de position électromotorisé selon une ou plusieurs des revendications 1 à 9 précédentes, **caractérisé en ce que** les poulies de renvoi (17, 18) pour les cordes de traction flexibles (23) sont de chaque côté une poulie fixe ou les poulies fixes d'une moufle.

11. Dispositif de réglage de position électromotorisé selon une ou plusieurs des revendications 1 à 10 précédentes, **caractérisé en ce que** les tronçons de profilés intérieurs (12, 13) et les tubes de guidage (14, 15) extérieurs sont constitués d'un métal léger, de préférence d'aluminium.

12. Dispositif de réglage de position électromotorisé selon une ou plusieurs des revendications 1 à 11 précédentes, **caractérisé en ce qu'**un ressort à gaz est associé à au moins une broche, mais de préférence aux deux broches.
